# EUROPEAN PATENT APPLICATION

(11) **EP 2 575 296 A1**
(43) Date of publication of application: **03.04.2013**
(21) Application number: 12176827.9
(22) Date of filing: 18.07.2012
(51) Int. Cl.: H04L 12/437

(54) **Method and apparatus for recovering unicast traffic during ethernet ring failover**

(30) Priority: 30.09.2011 CN 201110297915
(71) Applicant: Huawei Technologies Co., Ltd., Shenzhen, Guangdong 518129 (CN)
(72) Inventor: Xie, Ying, Shenzhen Guangdong 518129 (CN)
(74) Representative: Thun, Clemens

(57) **Abstract**

The present invention discloses a method and an apparatus for recovering unicast traffic during an Ethernet ring failover, relates to the field of communication technologies, and solves the problem of interruption of the unicast traffic caused by a link failure during the Ethernet ring failover and before completion of flushing of the MAC address table. In embodiments of the present invention, because a network switch sets the broadcast flags of the ports in the loop of the Ethernet ring to the set state before completion of flushing of the MAC address table, if the broadcast flag of the destination port corresponding to the destination address in a unicast packet received by the network switch is in the set state, the network switch broadcasts the unicast packet. Therefore, the network switch in the loop of the Ethernet ring can recover the interrupted unicast traffic without waiting for completion of flushing of the MAC address table, thereby implementing recovering the unicast traffic during an Ethernet ring failover.

## Description

### FIELD OF THE INVENTION

The present invention relates to the field of communication technologies, and in particular, to a method and an apparatus for recovering unicast traffic during an Ethernet ring failover.

### BACKGROUND OF THE INVENTION

The Ethernet ring (English: Ethernet ring) protection technology is a high-performance protection switching technology for the Ethernet service in a ring network topology.

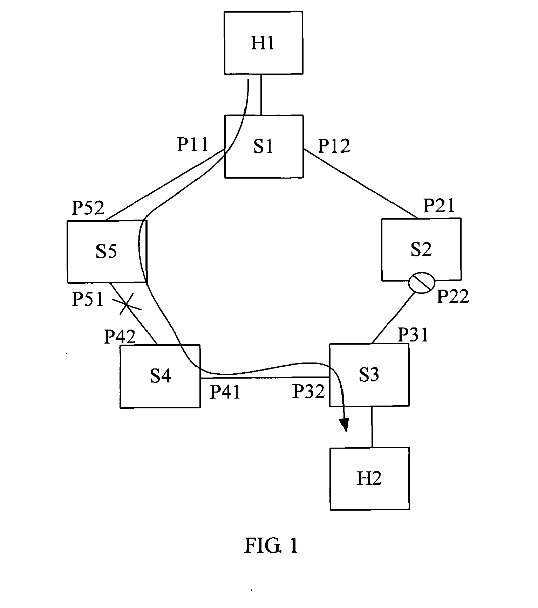

FIG. 1 shows a conventional Ethernet ring, where network switches S1-S5 constitute a loop through connections between ports, for example, port P11 of network switch S1 is connected to port P52 of network switch S5, port P12 of network switch S1 is connected to port P21 of network switch S2, and so on. A host H1 is connected to a port of network switch S1, and another host H2 is connected to a port of network switch S3, so that the two hosts can perform data interaction through the path connected by network switches S1, S5, S4, and S3, for example, the path indicated by the arrow in FIG. 1. When the Ethernet ring runs normally, a port of one of the network switches, such as port P22 of network switch S2, is blocked and packets other than a loop detection packet, such as a HEALTH packet, are not allowed to pass through the port, so as to prevent the broadcast storm caused by forwarding of the packets in the loop. Therefore, host H1 and host H2 can perform data interaction only through the path indicated by the arrow in FIG. 1. Wherein, the loop detection packet is sent by a network switch responsible for port blocking, and is used to detect whether the ring network topology is complete.

When the link between two adjacent network switches in the loop, such as the link between S4 and S5, namely, the position indicated by the diagonal cross in FIG. 1, fails, the protocol running on the Ethernet ring, for example, the Ethernet Ring Protection Switching (English: Ethernet Ring Protection Switching, ERPS for short) or Rapid Ring Protection Protocol (English: Rapid Ring Protection Protocol, RRPP for short) triggers a failover (English: failover), that is, a network switch connected to the failed link, such as network switch S4 and network switch S5, broadcasts a link failure notification packet in the loop, while network switch S2 responsible for port blocking unblocks the blocked port P22 after receiving the link failure notification packet; then the network switch S2 responsible for port blocking flushes the local media access control (English: media access control, MAC for short) address table and broadcasts a flush indication packet in the loop, for example, a RING-DOWN-FLUSH-FDB packet, so as to instruct other network switches in the loop to separately flush (English: flush) MAC address tables.

The destination address of the unicast (English: unicast) packet is a unicast address. The network switch needs to first search the local MAC address table for the port corresponding to the destination address when forwarding the unicast packet, and when finding the corresponding port, the network switch forwards the packet through the port, thereby implementing unicast forwarding of the unicast packet.

During the Ethernet ring failover, it is required to take some time to flush the MAC address table, and especially when there are many entries in the MAC address table, it may take scores or hundreds of milliseconds. Therefore, before completion of flushing of the MAC address table, a unicast packet is still forwarded through the port corresponding to the MAC address table before the link failure. For example, the unicast packet sent by host H1 to host H2 is forwarded, by network switch S1, to network switch S5 through port P21 corresponding to the MAC address table before the link failure. Because the link between S4 and S5 fails, the unicast packet cannot arrive at host H2. As a result, during the Ethernet ring failover and before completion of flushing of the MAC address table, unicast traffic, namely, multiple unicast packets sent sequentially, is interrupted. The interrupted unicast traffic cannot be recoverd until the flushing of the MAC address table is completed.

### SUMMARY OF THE INVENTION

The present invention provide a method and an apparatus for recovering unicast traffic during an Ethernet ring failover, which enable the Ethernet ring during the failover to recover the interrupted unicast traffic without waiting for completion of flushing of the MAC address table and enable the service flow to reach the destination host.

A first aspect of the invention provides, a method for recovering unicast traffic during an Ethernet ring failover includes: receiving, by a network switch in a loop of an Ethernet ring, a packet; if a destination address in the packet is a unicast address and the destination address is included in a local MAC address table, searching, by the network switch, the local MAC address table for a destination port corresponding to the destination address; if a broadcast flag of the destination port is in a set state, broadcasting, by the network switch, the packet; and setting, by the network switch, broadcast flags of ports in the loop of the Ethernet ring to a set state before completion of flushing of the local MAC address table, and to a reset state after completion of flushing of the local MAC address table.

In a first implementation form of the first aspect of the invention, after the network switch searches the local MAC address table for the destination port corresponding to the destination address, the method further includes: if the broadcast flag of the destination port is in a reset state, the network switch forwards the packet in unicast manner.

In a second implementation form of the first aspect of the invention, according to the first aspect of the invention or according to the first implementation form of the first aspect of the invention, the broadcast flag of the destination port is set in a component having a data storage function in the network switch.

A second aspect of the invention provides, an apparatus for recovering unicast traffic during an Ethernet ring failover includes: a receiving module, configured to receive a packet; a searching module, configured to: when a destination address in the packet is a unicast address and the destination address is included in a local MAC address table, search the local MAC address table for a destination port corresponding to the destination address; a forwarding module, configured to broadcast the packet when a broadcast flag of the destination port is in a set state; and a setting module, configured to set broadcast flags of ports in the loop of the Ethernet ring to a set state before completion of flushing of the local MAC address table, and set the broadcast flags of the ports in the loop of the Ethernet ring to a reset state after completion of flushing of the local MAC address table.

In a first implementation form of the second aspect of the invention, the forwarding module is further configured to forward the packet in unicast manner when the broadcast flag of the destination port is in a reset state.

In a second implementation form of the second aspect of the invention, according to the second aspect of the invention or according to the first implementation form of the second aspect of the invention, the broadcast flag of the destination port is set in a component having a data storage function in the apparatus.

In the method and apparatus for recovering unicast traffic during an Ethernet ring failover according to the present invention, because the network switch sets the broadcast flags of the ports in the loop of the Ethernet ring to a set state before completion of flushing of the MAC address table, if the destination address in the unicast packet received by the network switch exists in the local MAC address table, and when the broadcast flag of the destination port corresponding to the destination address is in the set state, the unicast packet is broadcast. Therefore, the time of interruption, of the unicast traffic, caused by a link failure may be reduced during an Ethernet ring failover, so that the network switch in the loop of the Ethernet ring can recover, without waiting for completion of flushing of the MAC address table, the interrupted unicast traffic from the time when the broadcast flag is set to the set state before completion of flushing of the MAC address table, thereby implementing recovering the unicast traffic during the Ethernet ring failover.

### BRIEF DESCRIPTION OF THE DRAWINGS

To make the technical solutions in the embodiments of the present invention or in the prior art clearer, the accompanying drawings for illustrating the embodiments of the present invention or the prior art are briefly described below. Evidently, the accompanying drawings illustrate only some exemplary embodiments of the present invention, and a person having ordinary skill in the art can derive other drawings from such accompanying drawings without any creative effort.
FIG. 1 is a schematic diagram of an Ethernet ring failover implemented by using an existing protocol;
FIG. 2 is a flowchart of a method for recovering unicast traffic during an Ethernet ring failover according to Embodiment 1 of the present invention;
FIG. 3 is a schematic diagram of an Ethernet ring failover implemented by using the method according to Embodiment 1 of the present invention; and
FIG. 4 is a block diagram of a network switch according to Embodiment 2 of the present invention.

### DETAILED DESCRIPTION OF THE EMBODIMENTS

The technical solutions provided in the embodiments of the present invention are hereinafter described clearly with reference to the accompanying drawings. Apparently, the described embodiments are only exemplary embodiments of the present invention and the present invention is not limited to such embodiments. All other embodiments, which can be derived by a person having ordinary skill in the art from the embodiments given herein without any creative effort, shall fall within the scope of the present invention.

### Embodiment 1

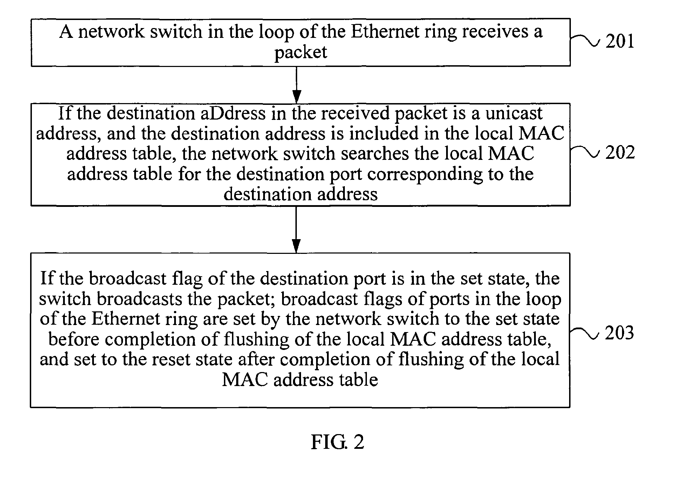

The embodiment of the present invention provides a method for recovering a layer-2 unicast service flow during an Ethernet ring failover. As shown in FIG. 2, the method includes the following steps: 201. A network switch in the loop of the Ethernet ring receives a packet.

Specifically, when a failure occurs on the Ethernet ring and triggers an Ethernet ring failover, the network switch responsible for port blocking unblocks the blocked port. Next, all network switches in the loop of the Ethernet ring flush respective local MAC address tables. The local MAC address table of a network switch is the MAC address table set in this network switch. Before each network switch in the loop completes flushing of the local MAC address table, each network switch in the loop receives various types of packets continuously, and the network switch performs the following processing in step 202 on the received packet. 202. If the destination address in the received packet is a unicast address, and the destination address is included in the local MAC address table, the network switch searches the local MAC address table for the destination port corresponding to the destination address.

Specifically, when parsing the received packet, the network switch first extracts the destination address in the packet, and then judges whether the destination address is a unicast address or a broadcast address; if the destination address is a unicast address, the packet is a unicast packet; if the destination address is a broadcast address, the packet is a broadcast packet.

If the received packet is a unicast packet, the network switch searches the local MAC address table for an entry corresponding to the destination address; if an entry corresponding to the destination address is found, it indicates that the destination address is included in the local MAC address table; then the network switch extracts the destination port corresponding to the destination address in the found entry, where the destination port is used to instruct the network switch to forward the packet through which port. 203. If the broadcast flag of the destination port is in the set state, the network switch broadcasts the packet; broadcast flags of ports in the loop of the Ethernet ring are set by the network switch to the set state before completion of flushing of the local MAC address table, and set to the reset state after completion of flushing of the local MAC address table.

Specifically, there are broadcast flags set for the ports in the loop of the Ethernet ring in the embodiment. A port in the loop of the Ethernet ring is: a port, of a network switch in the loop of the Ethernet ring, connected to its adjacent network switch of other network switches constituting the loop. The broadcast flag may be a binary bit, and has at least two states, for example, "0" indicates the reset state and "1" indicates the set state. The initial state of broadcast flags of ports in the loop of the Ethernet ring in the network switch is a reset state.

After the network switch responsible for port blocking in the loop unblocks the blocked port, the network switch responsible for port blocking in the loop begins to flush the local MAC address table and sends a flush indication packet, for example, a RING-DOWN-FLUSH-FDB packet, to other network switches in the loop of the Ethernet ring. The network switch responsible for port blocking may set broadcast flags of its ports in the loop of the Ethernet ring to the set state after unblocking the blocked port. If the flush indication packet is sent before the local MAC address table is flushed, the network switch responsible for port blocking may set the broadcast flags of its ports in the loop of the Ethernet ring to the set state after sending the flush indication packet. Of course, the juncture for setting the broadcast flags of the ports in the loop is not limited to the above two junctures, and may be any other juncture between the occurrence of the link failure on the Ethernet ring and the completion of flushing of the local MAC address table of the network switch, for example, the time when the local MAC address table begins to be flushed, or the time when a link failure notification packet in the loop is received.

A network switch other than the network switch responsible for port blocking in the loop may set broadcast flags of its ports in the loop of the Ethernet ring to the set state after receiving the flush indication packet. Alternatively, a network switch other than the network switch responsible for port blocking in the loop may set the broadcast flags of its ports in the loop to the set state after receiving a link failure notification packet of the loop. A network switch other than the network switch responsible for port blocking in the loop may set the broadcast flags of its ports in the loop at any other juncture between the occurrence of the link failure on the Ethernet ring and the completion of flushing of the local MAC address table of the network switch.

Upon completion of flushing of the local MAC address table, the network switch sets the broadcast flags, which have been set to the set state, of the ports in the loop of the Ethernet ring to the reset state.

MAC address table flushing is to delete MAC address entries, each of which has a destination port being a port in the loop.

The port in the loop of the Ethernet ring in the network switch is obtained after the port on the network switch is configured manually through configuration software during loop establishment. Multiple ports on a network switch may belong to different loops, and after configuration of the ports on the network switch is completed, the network switch can identify which ports belong to which loop in the running process.

If the broadcast flag of the found destination port corresponding to the destination address of the packet is in the set state, the network switch broadcasts the packet.

The above broadcasting is forwarding the packet through all ports other than the port receiving the packet, or forwarding the packet through all ports on this loop other than the port receiving the packet. The ports on the network switch may belong to different loops. If the packet is forwarded through all ports other than the port receiving the packet, the unicast packet forwarded in a unicast manner in a loop may be forwarded to other loops when a link in the loop fails. Therefore, a choice may be that the packet is only broadcast on the current loop.

In the method for recovering unicast traffic during an Ethernet ring failover according to the embodiment, because a network switch sets the broadcast flags of its ports in the loop of the Ethernet ring to the set state before completion of flushing of the MAC address table, if a destination address in a unicast packet received by the network switch is included in the local MAC address table, and the broadcast flag of the destination port corresponding to the destination address is in the set state, the unicast packet is broadcast. Therefore, the time of interruption, of the unicast traffic, caused by a link failure may be reduced during an Ethernet ring failover, so that the network switch in the loop of the Ethernet ring can recover, without waiting for completion of flushing of the MAC address table, the interrupted unicast traffic from the time when the broadcast flag is set to the set state before completion of flushing of the MAC address table, thereby implementing recovering the unicast traffic during the Ethernet ring failover.

The above method may further include the following: If the destination address in the received packet is a broadcast address, the network switch forwards the received packet in broadcast manner, that is, the network switch forwards the packet through all ports other than the port receiving the packet.

Specifically, the packet whose destination address is a broadcast address is a broadcast packet, and the network switch can forward the packet in broadcast manner in the loop without searching the local MAC address table.

If the destination address in the received packet is a unicast address, and the destination address is not in the local MAC address table, the received packet is forwarded in broadcast manner, that is, the packet is forwarded through all ports other than the port receiving the packet.

In addition, after the above step 202, the following may be included: If the broadcast flag of the destination port is in the reset state, the network switch forwards the packet in unicast manner through the destination port.

The above broadcast flag of the destination port may be set in a component having a data storage function in the network switch. The component may be a field-programmable gate array (English: field-programmable gate array, FPGA for short), or a complex programmable logic device (English: complex programmable logic device, CPLD for short), or an application specific integrated circuit (English: application specific integrated circuit, ASIC for short), or a network processor (English: network processor, NP for short).

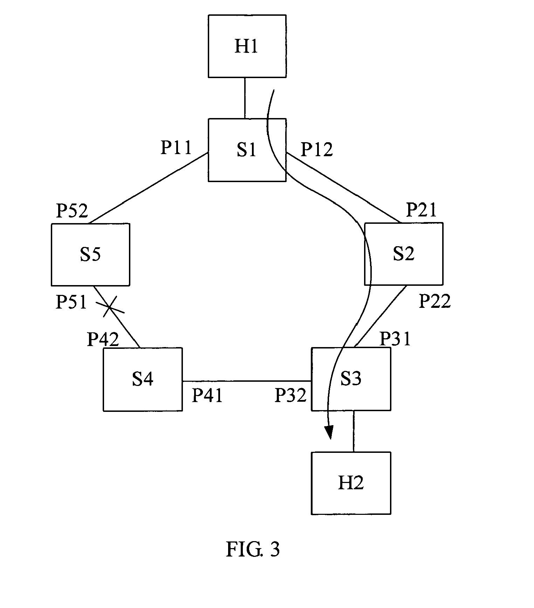

Referring to FIG. 3, the following describes an application scenario, which is used as an example, of a method for forwarding a unicast packet during an Ethernet ring failover according to the embodiment.

The structure of the Ethernet ring shown in FIG. 3 is the same as that of the Ethernet ring shown in FIG. 1. Network switches S1-S5 constitute a loop through connections between ports. Port P11 and port P12 of network switch S1, port P21 and port P22 of network switch S2, port P31 and port P32 of network switch S3, port P41 and port P42 of network switch S4, and port P51 and port P52 of network switch S5 are ports in the loop of the Ethernet ring. A host H1 is connected to network switch S1 through a port which is not in the loop, and another host H2 is connected to network switch S3 also through a port which is not in the loop. When the Ethernet ring runs normally, port P22 of network switch S2 is blocked. The packet sent by the host H1 to the host H2 passes through network switch S1, network switch S5, network switch S4, and network switch S3 in sequence. When the link between network switches S4 and S5 fails (the position shown by the diagonal cross in FIG. 3), an Ethernet ring failover is triggered, and network switch S2 unblocks the blocked port P22. Then, network switch S2 flushes the local MAC address table and broadcasts a flush indication packet in the loop, for example, a RING-DOWN-FLUSH-FDB packet. After unblocking the blocked port P22, network switch S2 immediately sets broadcast flags of the ports in the loop of the Ethernet ring to the set state.

Network switches other than network switch S2 in the loop set the broadcast flags of the ports in the loop of the Ethernet ring to the set states after receiving the flush indication packet.

After network switch S1 receives the unicast packet sent by the host H1 to the host H2, if the broadcast flag of the found destination port P11 corresponding to the destination address in the packet is in the set state, network switch S1 not only forwards the packet on port P11 but also forwards the packet on port P12. When the packet arrives at network switch S2, because the MAC address table of the network switch S2 does not include the entry corresponding to the destination address in the packet, network switch S2 forwards the packet in broadcast manner so that the packet arrives at network switch S3. The operation performed by network switch S3 is the same as that performed by network switch S2, so that the packet finally arrives at the destination, host H2. The arrow in FIG. 3 indicates the path through which the packet is forwarded from host H1 to host H2. When each network switch in the path through which the packet is forwarded from host H1 to host H2 receives the above packet sent by host H1 to host H2, the network switch also performs a process of MAC address learning in addition to the above forwarding process, that is, when judging that the source address in the received packet is not included in the local MAC address table, the network switch stores the mapping relationship between the port receiving the packet and the source address in the packet into the local MAC address table.

For example, after receiving a first packet through port P21, network switch S2 finds that there is no entry related to the destination address of the first packet in the local MAC address table, and therefore, forwards the first packet in broadcast manner. If the source address of the first packet is not included in the local MAC address table, the network switch stores the mapping relationship between the port P21 and the source address in the first packet into the local MAC address table. Afterward, when network switch S2 receives a second packet through a port other than port P21, and the destination address in the second packet is the same as the stored source address of the first packet, the network switch forwards the second packet on port P21.

### Embodiment 2

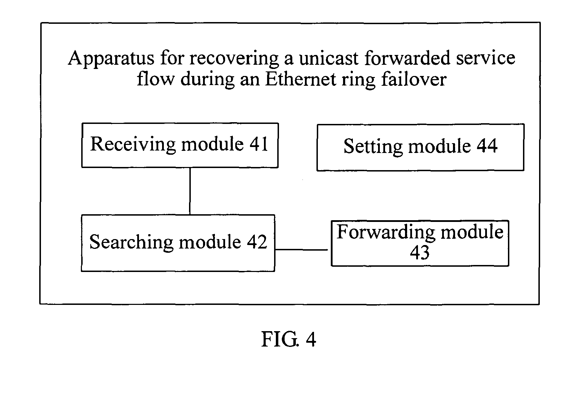

The embodiment provides an apparatus for recovering unicast traffic during an Ethernet ring failover. The apparatus is mainly implemented by a network switch. The network switch includes: a backplane and an Ethernet interface. The backplane may be set with a central processing unit (English: central processing unit, CPU for short), a switching chip, a buffer chip, a physical layer (English: physical layer, PHY for short) chip, and so on. As shown in FIG. 4, the apparatus includes:
a receiving module 41, configured to receive a packet;
a searching module 42, configured to: when a destination address in the packet is a unicast address, and the destination address is included in a local MAC address table, search the local MAC address table for a destination port corresponding to the destination address,
where the local MAC address table is a MAC address table set in the network switch for implementing the apparatus;
a forwarding module 43, configured to broadcast the packet when a broadcast flag of the destination port is in a set state; and
a setting module 44, configured to set the broadcast flags of the ports in the loop of the Ethernet ring to the set state before completion of flushing of the local MAC address table, and set the broadcast flags of the ports in the loop of the Ethernet ring to the reset state after completion of flushing of the local MAC address table.

Replacing the apparatus for recovering unicast traffic during an Ethernet ring failover provided in the embodiment with a network switch, the following describes the method executed by each module of the apparatus in detail.

During the failover of the Ethernet ring that the network switch belongs to, a network switch responsible for port blocking in the loop of the Ethernet ring unblocks the blocked port. Next, all network switches in the loop of the Ethernet ring flush respective local MAC address tables. The local MAC address table of a network switch is a MAC address table set in the network switch. Before each network switch in the loop completes flushing of the local MAC address table, each network switch in the loop receives various types of packets continuously through the receiving module 41, and the network switch performs the following processing on the received packets.

If the destination address in the received packet is a unicast address, and the destination address is included in the local MAC address table, the network switch searches the local MAC address table for the destination port corresponding to the destination address through the searching module 42. Specifically, when parsing the received packet, the network switch first extracts the destination address in the packet, and then judges whether the destination address is a unicast address or a broadcast address; if the destination address is a unicast address, the packet is a unicast packet; if the destination address is a broadcast address, the packet is a broadcast packet.

If the received packet is a unicast packet, the network switch searches the local MAC address table for the entry corresponding to the destination address; if the entry corresponding to the destination address is found, it indicates that the destination address is included in the local MAC address table; then the network switch extracts, through the searching module 42, the destination port corresponding to the destination address in the found entry, where the destination port is used to instruct the network switch to forward the packet through which port.

If the broadcast flag of the destination port is in the set state, the network switch broadcasts the packet through the forwarding module 43; the broadcast flags of the ports in the loop of the Ethernet ring are set by the network switch to the set state through the setting module 44 before flushing the local MAC address table, and set to the reset state through the setting module 44 after completion of flushing of the local MAC address table.

Specifically, there are broadcast flags set for the ports in the loop of the Ethernet ring in the embodiment, and the port in the loop of the Ethernet ring is: a port, of a network switch in the loop of the Ethernet ring, connected to its adjacent network switch of other network switches constituting the loop. The broadcast flags may be a binary bit, and has at least two states, for example, "0" indicates the reset state and "1" indicates the set state. The initial state of the broadcast flags of the ports in the loop of the Ethernet ring in the network switch is a reset state.

After the network switch responsible for port blocking in the loop unblocks the blocked port, the network switch begins to flush the local MAC address table and sends a flush indication packet to other network switches in the loop of the Ethernet ring, for example, a RING-DOWN-FLUSH-FDB packet. The network switch responsible for port blocking may set the broadcast flags of the ports in the loop of the Ethernet ring to the set state through the setting module 44 after unblocking the blocked port. If the flush indication packet is sent before the local MAC address table is flushed, the network switch responsible for port blocking may also set the broadcast flags of the ports in the loop of the Ethernet ring to the set state through the setting module 44 after sending the flush indication packet. Of course, the juncture for setting the broadcast flags of the ports in the loop is not limited to the above two junctures, and may be any other juncture between the occurrence of the link failure on the Ethernet ring and the completion of flushing of the local MAC address table of the network switch, for example, the time when the local MAC address table begins to be flushed, or the time when the link failure notification packet in the loop is received.

A network switch other than the network switch responsible for port blocking in the loop may set the broadcast flags of the ports in the loop of the Ethernet ring to the set state through the setting module 44 after receiving the flush indication packet. Optionally, a network switch other than the network switch responsible for port blocking in the loop may set the broadcast flags of the ports in the loop to the set state through the setting module 44 after receiving the link failure notification packet of the loop. A network switch other than the network switch responsible for port blocking in the loop may also set the broadcast flags of the ports in the loop through the setting module 44 on any other juncture between the occurrence of the link failure on the Ethernet ring and the completion of flushing of the local MAC address tables of the network switches.

Upon completion of flushing of the local MAC address table, the network switch sets the broadcast flags, which have been set to the set state, of the ports in the loop of the Ethernet ring to the reset state through the setting module 44.

MAC address table flush is deleting the MAC address entry whose destination port is the port in the loop.

The port in the loop of the Ethernet ring in the network switch is obtained after the port on the network switch is configured manually through configuration software during loop establishment. Multiple ports on a network switch may belong to different loops, and after configuration of the ports on the network switch is completed, the network switch can identify which ports belong to which loop in the running process.

If the broadcast flag of the found destination port corresponding to the destination address of the packet is in the set state, the network switch broadcasts the packet through the forwarding module 43.

The above broadcasting is forwarding the packet through all ports other than the port receiving the packet, or forwarding the packet through all ports other than the port receiving the packet on this loop. The ports on the network switch may belong to different loops. If the packet is forwarded through all ports other than the port receiving the packet, the unicast packet forwarded in unicast manner in a loop may be forwarded to other loops when the link in the loop fails. Therefore, a choice may be that the packet is broadcast on the current loop.

If the destination address in the received packet is a broadcast address, the network switch forwards the received packet in broadcast manner through the forwarding module 43, that is, the network switch forwards the packet through all ports other than the port receiving the packet.

Specifically, the packet whose destination address is a broadcast address is a broadcast packet, and the network switch can forward the packet in broadcast manner in the loop through the forwarding module 43 without searching the local MAC address table.

If the destination address in the received packet is a unicast address, and the destination address is not in the local MAC address table, the received packet is forwarded in broadcast manner through the forwarding module 43, that is, the packet is forwarded through all ports other than the port receiving the packet.

In addition, if the broadcast flag of the destination port is in the reset state, the network switch forwards the packet in unicast manner through the destination port through the forwarding module 43.

The above broadcast flag of the destination port may be set in a component having a data storage function in the network switch. The component may be a field-programmable gate array, or a complex programmable logic device, or an application specific integrated circuit, or a network processor.

In the apparatus for recovering unicast traffic during an Ethernet ring failover according to the embodiment, because the network switch sets the broadcast flags of the ports in the loop of the Ethernet ring to the set state before completion of flushing of the MAC address table, if the destination address in the unicast packet received by the network switch is included in the local MAC address table, and the broadcast flag of the destination port corresponding to the destination address is in the set state, the unicast packet is broadcast. Therefore, the time of interruption, of the unicast traffic, caused by a link failure may be reduced during an Ethernet ring failover, so that the network switch in the loop of the Ethernet ring can recover, without waiting for completion of flushing of the MAC address table, the interrupted unicast traffic from the time when the broadcast flag is set to the set state before completion of flushing of the MAC address table, thereby implementing recovering the unicast traffic during the Ethernet ring failover.

Embodiments of the present invention are mainly used on the Ethernet ring supporting various types of ring network protocols.

Detailed above are only exemplary embodiments of the present invention, but the scope of the present invention is not limited thereto. Any modification or substitution readily conceivable by the skilled person within the scope of the technology disclosed herein shall fall within the scope of the present invention. Therefore, the scope of the present invention is subject to the appended claims.

## Claims

1. A method for recovering unicast traffic during an Ethernet ring failover, comprising:
receiving, by a network switch in a loop of an Ethernet ring, a packet;
if a destination address in the packet is a unicast address and the destination address is comprised in a local MAC address table, searching, by the network switch, the local MAC address table for a destination port corresponding to the destination address;
if a broadcast flag of the destination port is in a set state, broadcasting, by the network switch, the packet; and
setting, by the network switch, broadcast flags of ports in the loop of the Ethernet ring to a set state before completion of flushing of the local MAC address table, and to a reset state after completion of flushing of the local MAC address table.

2. The method according to claim 1, wherein after the network switch searches the local MAC address table for the destination port corresponding to the destination address, the method further comprises:
if the broadcast flag of the destination port is in a reset state, forwarding, by the network switch, the packet in unicast manner.

3. The method according to claim 1 or 2, wherein the broadcast flag of the destination port is set in a component having a data storage function in the network switch.

4. An apparatus for recovering unicast traffic during an Ethernet ring failover, comprising:
a receiving module, configured to receive a packet;
a searching module, configured to: when a destination address in the packet is a unicast address and the destination address is comprised in a local MAC address table, search the local MAC address table for a destination port corresponding to the destination address;
a forwarding module, configured to broadcast the packet when a broadcast flag of the destination port is in a set state; and
a setting module, configured to set broadcast flags of ports in a loop of an Ethernet ring to a set state before completion of flushing of the local MAC address table, and set the broadcast flags of the ports in the loop of the Ethernet ring to a reset state after completion of flushing of the local MAC address table.

5. The apparatus according to claim 4, wherein the forwarding module is further configured to forward the packet in unicast manner when the broadcast flag of the destination port is in a reset state.

6. The apparatus according to claim 4 or 5, wherein the broadcast flag of the destination port is set in a component having a data storage function in the apparatus.
